(19) Europäisches Patentamt
European Patent Office
Office européen des brevets

(11) **EP 3 835 973 A1**

(12) **EUROPEAN PATENT APPLICATION**

(43) Date of publication:
**16.06.2021 Bulletin 2021/24**

(51) Int Cl.:
**G06F 16/34** (2019.01)   **G06F 40/274** (2020.01)

(21) Application number: **20178727.2**

(22) Date of filing: **08.06.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
**KH MA MD TN**

(30) Priority: **13.12.2019 CN 201911285457**

(71) Applicant: **Beijing Xiaomi Intelligent Technology Co., Ltd.**
**Beijing 100085 (CN)**

(72) Inventors:
• **GUO, Qun**
  **Beijing, Beijing 100085 (CN)**
• **LU, Xiao**
  **Beijing, Beijing 100085 (CN)**

• **MENG, Erli**
  **Beijing, Beijing 100085 (CN)**
• **WANG, Bin**
  **Beijing, Beijing 100085 (CN)**
• **SHI, Liang**
  **Beijing, Beijing 100085 (CN)**
• **QI, Baoyuan**
  **Beijing, Beijing 100085 (CN)**
• **JI, Hongxu**
  **Beijing, Beijing 100085 (CN)**

(74) Representative: **dompatent von Kreisler Selting Werner -**
**Partnerschaft von Patent- und Rechtsanwälten mbB**
**Deichmannhaus am Dom**
**Bahnhofsvorplatz 1**
**50667 Köln (DE)**

(54) **KEYWORD EXTRACTION METHOD, KEYWORD EXTRACTION DEVICE AND COMPUTER-READABLE STORAGE MEDIUM**

(57)   A keyword extraction method comprises: receiving an original document (S11); extracting candidate words from an original document to form a first word set (S12); acquiring the first correlation degree between each candidate word in the first word set and the original document, and determining a second word set according to the first correlation degree (S13); generating predicted words through a prediction model based on the original document, the obtained predicted words forming a third word set (S14); determining a union set of the second and third word sets (S15), acquiring the second correlation degree between each of the candidate keywords in the union set and the original document (S16), acquiring a divergence of each candidate keyword in the union set (S17); and selecting at least one candidate keyword from the union set as keywords based on the second correlation degree and the divergence (S18). Keyword redundancy can be avoided through the divergence of keywords. The final keywords are not affected by the frequency of candidate words, and the expression mode of keywords can be enriched.

FIG. 1

**Description**

TECHNICAL FIELD

The present disclosure relates generally to the field of text processing technologies, and more specifically to a keyword extraction method, a keyword extraction device, an electronic device and a computer-readable storage medium.

BACKGROUND

With the explosive growth of textual data on the Internet, it is often needed to extract keywords that summarize the core point of an article in order to achieve functions such as accurate recommendation and key point annotation.
Keyword extraction sometimes has strong subjectivity in operation, and it may be difficult to obtain available labeled corpora. Traditional extraction methods have low accuracy and takes long time on calculation.
In related arts, keyword extraction can be implemented by two methods such as keyword extraction for words appearing in the text and keyword generation for words not appearing in the text. For Keyword extraction, there are statistics-based methods, graph-based methods, and sequence labeling-based methods. The statistics-based methods highly depend on the design of statistical features by experts, while the graph-based methods generally have high time complexity (generally above $O(n^2)$). In addition, the two methods have common defects. For example, not all screened keywords have semantic relationship with the text, and frequent words tend to be used as keywords. The sequence labeling-based method is a supervised method that relies on labeled corpora and is only suitable for tasks in the field of training corpus.
At present, the keyword extraction methods have the following disadvantages. The traditional keyword extraction method has low accuracy and low coverage rate. The method based on statistical features and graph random walk cannot guarantee the semantic relationships between the extracted keywords and the article, especially in the case of multiple topics in the article. The traditional keyword extraction methods are difficult to control the similarity between keywords, tend to generate redundant keywords, more inclined to extract high-frequency common words not necessarily suitable for generalizing the semantics of the article. The traditional keyword generation and keyword extraction are not in the same semantic framework, which makes it difficult to combine and complement the two frameworks.

SUMMARY

The present disclosure provides a keyword extraction method, a keyword extraction device, and a computer-readable storage medium so as to resolve shortage in related arts.
According to a first aspect of the embodiments of the present disclosure, there is provided a keyword extraction method including: receiving an original document; extracting candidate words from the original document, the extracted candidate words forming a first word set; acquiring the first correlation degree between each candidate word in the first word set and the original document, and determining a second word set according to the first correlation degree, the second word set being a subset of the first word set; generating predicted words through a prediction model based on the original document, the obtained predicted words forming a third word set; determining a union set of the second word set and the third word set; acquiring the second correlation degree between each of the candidate keywords in the union set and the original document; acquiring a divergence of each of the candidate keywords in the union set; and selecting at least one candidate keyword from the union set as keywords, based on the second correlation degree and the divergence, to form a keyword set for the original document.
Preferably, the selecting the at least one candidate keyword from the union set as the keywords, based on the second correlation degree and the divergence, to form the keyword set of the original document includes: determining whether the second correlation degree between each candidate keyword in the union set is greater than a preset correlation threshold, and determining whether the divergence of each candidate keyword in the union set is greater than a preset divergence threshold; selecting at least one candidate keyword from the union set, the second correlation degree between the at least one candidate keyword being greater than the preset correlation threshold and the divergence of the at least one candidate keyword being greater than the preset divergence threshold; and taking the at least one candidate keyword as the keyword.
Preferably, before the determining whether the second correlation degree between each candidate keyword in the union set is greater than the preset correlation threshold, the method further includes: multiplying the second correlation degree between portion of candidate keywords from the third word set in the union set by a compensation factor greater than 1, to get a product as a finally determined second correlation degree, in which the compensation factor is .
Preferably, the acquiring the divergence of each candidate keyword in the union set includes: determining current to-be-determined candidate keyword from the union set; acquiring a correlation degree between the current to-be-determined candidate keyword and the original document and a correlation degree between the current to-be-determined candidate keyword and the selected keyword in the keyword set; and determining a divergence of the current to-be-determined candidate keyword based on the correlation degree between the current to-be-determined candidate keyword and the original document, the correlation degree between the current to-be-determined candidate keyword and the selected keyword in the keyword set, and a preset divergence, until the divergence of each candidate keyword in the union set is determined.

Preferably, the divergence of the current to-be-determined candidate keyword is calculated by a formula:

$$S_1(x, D) = \arg\max_{x \in \Omega \backslash \theta} \left[ (1 - \lambda) S(x, D) - \lambda \max_{y \in \theta} Y_{sim}(x, y) \right];$$

wherein $x$ indicates a word feature vector of the current to-be-determined candidate keyword; $y$ represents a word feature vector of the selected keyword in the keyword set; $S_1(x, D)$ denotes the divergence of the current to-be-determined candidate keyword; $S(x, D)$ indicates the correlation degree between the current to-be-determined candidate keyword and the original document; $Y_{sim}(x, y)$ represents the correlation degree between the current to-be-determined candidate keyword and the selected keyword in the keyword set; $\lambda$ denotes the preset divergence; and $\lambda$ is greater than or equal to 0 and less than or equal to 1.

Preferably, the extracting the candidate words from the original document includes: extracting a plurality of candidate words matched with a preset phrase granularity from the original document according to candidate word extraction rules determined based on the preset phrase granularity; wherein the candidate words matched with the preset phrase granularity include: nominal words, or nominal phrases combined from modifying words and nominal words.

Preferably, the method further includes: extracting verbal, nominal or modifying words from the original document to form a denoised document; calculating a document feature vector of the denoised document via a vector generation model based on unlabeled/untagged corpus training; extracting nominal words or nominal phrases combined from modifying words with nominal phrases from the denoised document to form a to-be-clustered word set; and acquiring a word feature vector of each to-be-clustered word in the to-be-clustered word set via the vector generation model, clustering the to-be-clustered words according to the word feature vectors to form a plurality of cluster sets for the original document.

Preferably, the acquiring the first correlation degree between each candidate word in the first word set and the original document includes: calculating the first correlation degree between each candidate word and the original document according to the document feature vector, the plurality of cluster sets, and the word feature vector of each candidate word in the first word set; and the acquiring the second correlation degree between each of the candidate keywords in the union set and the original document includes: calculating the second correlation degree between the candidate keyword and the original document according to the document feature vector, the plurality of cluster sets, and the word feature vector of each candidate keyword in the union set.

Preferably, the first correlation degree or the second correlation degree is calculated according to a formula:

$$S(z, D) = \alpha \cdot Y_{sim}(z, V_0) + \beta \cdot \frac{\sum_{i=1}^{M} Y_{sim}(z, C_i)}{M};$$

wherein $z$ indicates a word feature vector of each candidate word in the first word set or a word feature vector of any candidate keyword in the union set; $S(z, D)$ represents the first correlation degree or the second correlation degree; $\alpha$ denotes a first weight coefficient; $\beta$ indicates a second weight coefficient; $Y_{sim}()$ represents a similarity function; $V_0$ denotes the document feature vector; $C_i$ denotes a cluster feature vector of the i-th cluster set; $M$ is number of the cluster sets; $i$ and $M$ are positive integers.

Preferably, the prediction model includes a bilateral network and a unilateral recurrent neural network (RNN); and the generating the predicted words through the prediction model based on the original document includes: calculating original word feature vector of the original document via the vector generation model; obtaining a memory representation vector via the bilateral network based on the original word feature vector; and generating the predicted words via the unilateral RNN based on the memory representation vector and the document feature vector.

Preferably, the prediction model is obtained by acquiring a training set having a plurality of training corpora and one or more labeled keywords corresponding to each training corpus; obtaining a training word feature vector of each word in the training corpora and a first corpus feature of the training corpus through the vector generation model; obtaining a second corpus feature of an original corpus via the bilateral network based on the training word feature vector; obtaining output keywords via the unilateral RNN based on the first corpus features and the second corpus features; and calculating loss based on the labeled keywords and the output keywords, and adjusting parameters of the prediction model according to the loss.

Preferably, the determining the second word set according to the first correlation degree includes: selecting candidate words with the first correlation degree greater than a first preset correlation value, to form the second word set; or selecting candidate words with the first correlation degree listed before a first preset position in an order from high correlation degree to low correlation degree, to form the second word set; or selecting candidate words with the first correlation degree in a previous first preset proportion part in the order from high correlation degree to low correlation degree, to form the second word set.

According to a second aspect of the embodiments of the present disclosure, there is provided a keyword extraction device including: receiving module configured to receive an original document; an extraction module configured to extract candidate words from the original document, the extracted candidate words forming a first word set; a first acquisition module configured to acquire a first correlation degree between each candidate word in the first word set and the original document; a first determination module configured to determine a second word set according to the first correlation degree, the second word set being a subset of the first word set; a prediction module configured to generate predicted words through a prediction model based on the original document, the obtained predicted words forming a third word set; a second determination module configured to determine a union set of the second word set and the third word set; a second acquisition module configured to acquire the second correlation degree between each of the candidate keywords in the union set and the original document; a divergence acquisition module configured to acquire a divergence of each candidate keyword in the union set; and a first selection module configured to select at least one candidate keyword from the union set as keywords, based on the second correlation degree and the divergence, to form a keyword set for the original document.

Preferably, the first selection module comprises: a first judging module configured to judge whether the second correlation degree between each candidate keyword in the union set is greater than a preset correlation degree threshold; a second judging module configured to judge whether the divergence of each candidate keyword in the union set is greater than a preset divergence threshold; and a second selection module configured to select at least one candidate keyword from the union set, the second correlation degree between the at least one candidate keyword being greater than the preset correlation degree threshold and the divergence of the at least one candidate keyword being greater than the preset divergence threshold, and to take the at least one candidate keyword as the keyword.

Preferably, the first selection module further comprises: a weighting module configured to multiply the second correlation degree between portion of candidate keywords from the third word set in the union set by a compensation factor greater than 1 to get a product as a finally determined second correlation degree.

Preferably, the divergence acquisition module comprises: a third determination module configured to determine current to-be-determined candidate keyword from the union set; a third acquisition module configured to acquire a correlation degree between the current to-be-determined candidate keyword and the original document and a correlation degree between the current to-be-determined candidate keyword and the selected keyword in the keyword set; and a divergence determination module configured to determine a divergence of the current to-be-determined candidate keyword according to the correlation degree between the current to-be-determined candidate keyword and the original document, the correlation degree between the current to-be-determined candidate keyword and the selected keyword in the keyword set, and a preset divergence, until the divergence of each candidate keyword in the union set is determined.

Preferably, the divergence determination module is further configured to calculate the divergence of the current to-be-determined candidate keyword according to a formula:

$$S_1(x, D) = \arg\max_{x \in \Omega \setminus \theta} \left[ (1 - \lambda) S(x, D) - \lambda \max_{y \in \theta} Y_{sim}(x, y) \right],$$

wherein $x$ indicates a word feature vector of the current to-be-determined candidate keyword; $y$ represents a word feature vector of the selected keyword in the keyword set; $S_1(x, D)$ denotes the divergence of the current to-be-determined candidate keyword; $S(x, D)$ indicates the correlation degree of the current to-be-determined candidate keyword with the original document; $Y_{sim}(x, y)$ represents the correlation degree of the current to-be-determined candidate keyword with the selected keyword in the keyword set; $\lambda$ denotes the preset divergence; and $\lambda$ is greater than or equal to 0 and less than or equal to 1.

Preferably, the extraction module is further configured to: extract a plurality of candidate words matched with a preset phrase granularity from the original document according to candidate word extraction rules determined based on the preset phrase granularity; wherein the candidate words matched with the preset phrase granularity include: nominal words, or nominal phrases combined from modifying words with nominal words.

Preferably, the keyword extraction device further comprises: a first forming module configured to form a denoised document by extracting verbal, nominal or modifying words from the original document; a calculating module configured to calculate a document feature vector of the denoised document via a vector generation model based on unlabeled corpus training; and a clustering module configured to extract nominal words or nominal phrases combined from modifying words and nominal words from the denoised document to form a to-be-clustered word set, acquire a word feature vector of each to-be-clustered word in the to-be-clustered word set via the vector generation model, cluster the to-be-clustered words according to the word feature vectors to form a plurality of cluster sets for the original document.

Preferably, the first acquisition module comprises a second calculating module configured to calculate the first correlation degree between each candidate word and the original document according to the document feature vector, the plurality of cluster sets and the word feature vector of each candidate word in the first word set; and the second acquisition module comprises a third calculating module configured to calculate the second correlation degree between each of the candidate keywords and the original document according to the document feature vector, the plurality of cluster sets and the word feature vector of each candidate keyword in the union set.

Preferably,The first correlation degree and the second correlation degree are calculated respectively by the second calculating module and the third calculating module according to a formula:

$$S(z, D) = \alpha \cdot Y_{sim}(z, V_0) + \beta \cdot \frac{\sum_{i=1}^{M} Y_{sim}(z, C_i)}{M} ;$$

wherein $z$ indicates a word feature vector of each candidate word in the first word set or a word feature vector of any candidate keyword in the union; S(z,D) represents the first correlation degree or the second correlation degree; $\alpha$ denotes a first weight coefficient; $\beta$ indicates a second weight coefficient; $Y_{sim}()$ represents a similarity function; $V_0$ denotes the document feature vector; $C_i$ denotes a cluster feature vector of the i-th cluster set; $M$ is number of the cluster sets; and $i$ and $M$ are positive integers.

Preferably, the prediction model includes a bilateral network and a unilateral RNN; and and the prediction module comprises: a word vector generation unit configured to calculate original word feature vector of the original document via the vector generation model; a coding unit configured to obtain a memory representation vector via the bilateral network based on the original word feature vector; and a decoding unit configured to generate the predicted words via the unilateral RNN based on the memory representation vector and the document feature vector.

Preferably, the prediction model is obtained by acquiring a training set having a plurality of training corpora and one or more labeled keywords corresponding to each training corpus; obtaining a training word feature vector of each word in the training corpus and a first corpus feature of the training corpus through the vector generation model; obtaining a second corpus feature of an original corpus via the bilateral network based on the training word feature vector; obtaining output keywords via the unilateral RNN based on the first corpus features and the second corpus features; and calculating loss based on the labeled keywords and the output keywords, and adjusting the parameters of the prediction model according to the loss.

Preferably, the first determination module comprises: a second forming module configured to select candidate words with the first correlation degree greater than the first preset correlation value, to form the second word set; or a third forming module configured to select candidate words with the first correlation degree listed before a first preset position in an order from high correlation degree to low correlation degree, to form the second word set; or a fourth forming module configured to select candidate words with the first correlation degree in a previous first preset proportion part in the order from high correlation degree to low correlation degree, to form the second word set.

According to a third aspect of the embodiments of the present disclosure, there is provided a computer-readable storage medium having stored therein instructions and implementing the keyword extraction method according to the first aspect when the instructions are executed by a processor.

Various embodiments of the present disclosure can have the following advantages: solving the problem of keyword redundancy by adjusting the semantic divergence of keywords; and solving the problem of selecting high-frequency words, without influence from the frequency of candidate words.

It should be understood that the above general description and the following detailed description are exemplary and explanatory, and are not intended to limit the present disclosure.

BRIEF DESCRIPTION OF THE DRAWINGS

The accompanying drawings, which are incorporated in and constitute a part of this disclosure, illustrate embodiments consistent with the disclosure and, together with the disclosure, serve to explain the principles of the disclosure.

FIG. 1 is a flowchart illustrating a keyword extraction method in accordance with an exemplary embodiment.

FIG. 2 is a flowchart illustrating another keyword extraction method in accordance with an exemplary embodiment.

FIG. 3 is a schematic block diagram illustrating a prediction model in accordance with an exemplary embodiment.

FIG. 4 is a schematic block diagram illustrating a keyword extraction device in accordance with an exemplary embodiment.

FIG. 5 is a schematic block diagram illustrating another keyword extraction device in accordance with an exemplary embodiment.

FIG. 6 is a schematic block diagram illustrating a device in accordance with an exemplary embodiment.

FIG. 7 is a schematic block diagram illustrating an electronic device in accordance with an exemplary embodiment.

DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of devices and methods consistent with aspects related to the invention as recited in the appended claims.

In related arts, Keyword extraction typically includes two methods: the first method is keyword extraction for words appearing in the text; and the second method is keyword generation for words not appearing in the text.

There are many implementations for keyword extraction in the first method, specifically including: statistics-based method, graph-based method and sequence labeling-based method. Herein, the statistics-based method highly depends on the design of statistical features by experts, while the graph-based method generally has high time complexity (generally above $O(n^2)$). The two methods have some common defects. For example, not all filtered keywords have semantic relationship with the text, and frequent words tend to be used as keywords. The sequence labeling-based method is a supervised method that relies on labeled corpora and is only suitable for tasks in the field of training corpus.

There are also many implementations for keyword generation in the second method, specifically including: translation-alignment-based method and sequence-to-sequence (seq2seq)-based method. Both methods rely on a large number of labeled corpora with high computational complexity, and are only applicable to the field of training corpus.

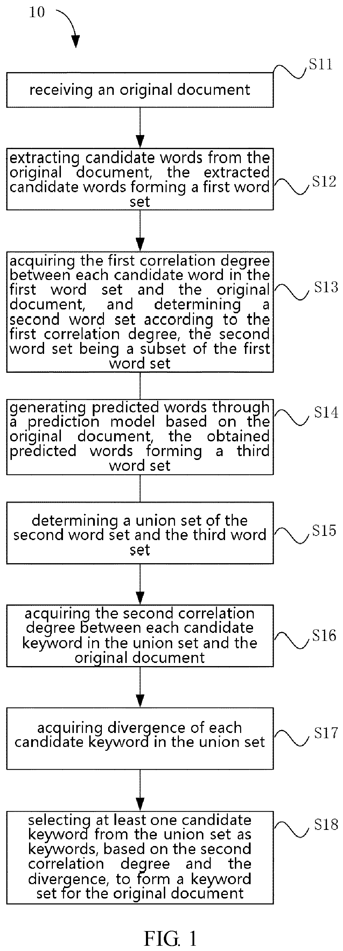

In order to solve the above problems, the embodiments of the present disclosure provide a keyword extraction method 10. The method may run on a mobile terminal such as a mobile phone, and may also run on a network-side device such as a server, a processing center, etc. Referring to FIG. 1, the keyword extraction method 10 comprises the steps S11 to S16. Moreover, the sequence of operating steps of the method in the embodiments of the present disclosure is not limited to the described sequence in the embodiments. The steps will be described in detail hereinafter.

Step S11: receiving an original document.

The original document to be processed may be acquired locally or be acquired from a network side or other databases.

Step S12: extracting candidate words from the original document, wherein the extracted candidate words form a first word set.

The candidate keywords can be highly efficiently acquired by directly extracting the candidate words from the original document.

In one embodiment, in the step S12, a plurality of candidate words matched with a preset phrase granularity may be extracted from the original document according to candidate extraction rules determined according to the preset phrase granularity; wherein, the candidate words matched with the preset phrase granularity include nominal words, or nominal phrases combined from modifying words with nominal words.

In the embodiment, the granularity may be preset, and candidate words which are nouns and adjectives are extracted from the original document according to the candidate word extraction rules; or candidate words which are nouns are extracted from the original document according to the candidate word extraction rules.

Herein, the process of extracting the candidate words with preset part-of-speech (for example, the preset part-of-speech is noun and adjective, or, the preset part-of-speech is noun) from the original document includes one of the following two approach.

First approach: performing manual part-of-speech tagging on the original document, and extracting the candidate words with the preset part-of-speech from the document in which part-of-speech of words have been tagged/labeled. All the words are labeled with corresponding part-of-speech in the process of manual part-of-speech tagging, or only words corresponding to the preset part-of-speech are labeled.

Second approach: performing part-of-speech tagging on the original document via part-of-speech tagging software. The candidate words with the preset part-of-speech are extracted from the document in which part-of-speech of words have been labeled. In the process of tagging via the part-of-speech tagging software, the range of the part-of-speech required to be labeled is set. The range may be set to be all the parts of speech and may also be set to be the preset part-of-speech.

The candidate word extraction rules are determined according to at least one of number of words, frequency of occurrence, and frequency of occurrence of synonyms.

In this method, multiple parameters are set in the candidate word extraction rules. The multiple parameters not only involve the parameter of the frequency of occurrence (namely the frequency of occurrence of the same word) but also involve relevant parameters including the number of words and the synonym concept, so the extracted candidate words are not just words with the single characteristic that the word appears most frequently or relatively frequently in the text, but are more diverse and multifaceted candidate words for which the concept of synonymy are taken into account. The candidate words selected by this method can better reflect the subject in the text, compared with the prior art.

Step S13: acquiring the first correlation degree between each candidate word in the first word set and the original document, and determining a second word set according to the first correlation degree, wherein the second word set is a subset of the first word set.

After acquiring the candidate words from the original document, primary screening is performed on each candidate word in the first word set composed of the candidate words, according to the correlation degree between the candidate word and the original document, to form the second word set. As the candidate words in the second word set are all from the first word set, the second word set can be considered as a subset of the first word set.

In one embodiment, the step S13 may adopt any following approach:

First approach: selecting candidate words of which the first correlation degree is greater than the preset correlation value, to form the second word set. For example, the first preset correlation value is 80%, and candidate words of which the first correlation degree is greater than the first preset correlation value are selected.

Second approach: selecting candidate words of which the first correlation degree is listed before the first preset position in an order from high correlation degree to low correlation degree, to form the second word set. For example, the first preset position refers to the 6th position in the order; and when the order of the first correlation degree and the original document from high correlation degree to low correlation degree includes 30 positions in total, candidate words of which the first correlation degree and the original document is at the previous five positions, are selected.

Third approach: selecting candidate words of which the first correlation degree is in a previous first preset proportion part in an order from high correlation degree to low correlation degree, to form the second word set. For example, the first preset proportion refers to 10% in the order; and when the order of the first correlation degree and the original document from high correlation degree to low correlation degree includes 30 positions in total, candidate words of which the first correlation degree and the original document is at the previous three positions, are selected.

By adopting the above three approaches, candidate words with appropriate precision and/or a proper number of candidate words can be selected from the first word set as required to form the second word set.

Step S14: generating predicted words through a prediction model based on the original document, wherein the obtained predicted words form a third word set.

The structure and the training mode of the prediction model are described in detail hereinafter. In the embodiment, the keywords of the original document can be generated through the prediction model, and the obtained predicted words form the third word set. As the predicted words are generated through the prediction model, the predicted words may not exist in the direct recording of the original document, thereby avoiding the problem of limitation or inaccuracy caused by the fact that the final keywords obtained in some related arts are only originally recorded words.

Step S15: determining a union set of the second word set and the third word set; step S16: acquiring a second correlation degree between each of the candidate keywords in the union set and the original document; and step S17: acquiring a divergence of each candidate keywords in the union set.

The second word set and the third word set are combined. As there may be same candidate keywords, the union set is taken.

Step S18: selecting at least one candidate keyword from the union set as keywords, based on the second correlation degree and the divergence, to form a keyword set for the original document.

The second correlation degree between each of the candidate keywords and the original document and the divergence thereof are respectively acquired, and the candidate keywords are further selected based on the second correlation degree and the divergence to obtain keywords that are associated with and divergent from the original document, thereby ensuring that the obtained keywords are accurate and can more comprehensively cover the original document.

In one embodiment, the step S18 may include: determining whether the second correlation degree between each candidate keyword in the union set is greater than a preset correlation degree threshold, and determining whether the divergence of each candidate keyword in the union set is greater than a preset divergence threshold; selecting at least one candidate keyword from the union set, the second correlation degree thereof is greater than the preset correlation degree threshold and the divergence is greater than the preset divergence threshold thereof; and taking the at least one candidate keyword as a keyword. This method may be adopted to select keywords which are not only close to the meaning of the original document but also divergent, and select a plurality of keywords by means of multiple iterations, and the iteration times may be determined according to the number of required keywords or the total word number of keywords.

In some other embodiments, before determining whether the second correlation degree between each candidate keyword in the union set is greater than the preset correlation degree threshold, the second correlation degree between portion of candidate keywords from the third word set in the union set is multiplied by a compensation factor greater than 1 to get a product as a finally determined second correlation degree. The candidate words from the third word set are generated through the prediction model and may not exist in the direct recording of the original document. Thus, there may be error in the process of calculating the correlation degree, and the correlation degree may be lower than the correlation degree between some candidate keywords that are directly recorded in the original document. Therefore, in the embodiment, the second correlation degree between the candidate keywords from the third word set are compensated by being multiplied by a compensation factor such as 1.2, and the product value after multiplying is taken as the final value of the second correlation degree between the candidate keyword, thereby ensuring the result be more accurate.

In any foregoing embodiment of the present disclosure, the selection of the keywords according to the divergence can solve the problem of keyword extraction redundancy and solve the problem that the traditional method is more inclined to select high-frequency words as this method is not affected by the frequency of the candidate words. Moreover, in the embodiment of the present disclosure, the keyword extraction as described in the step S12 and the keyword generation as described in the step S14 are simultaneously adopted and combined with complementary effect.

For example, although an original document is an article introducing long short-term memory (LSTM) focusing on the specific discussion techniques of LSTM without words such as "neural network" and "artificial intelligence", the keywords finally selected using this method include the words such "neural network", "artificial intelligence" in the word correlation topology. Although these words do not appear in the original document, they can reflect the subject of the original document at different meaning levels.

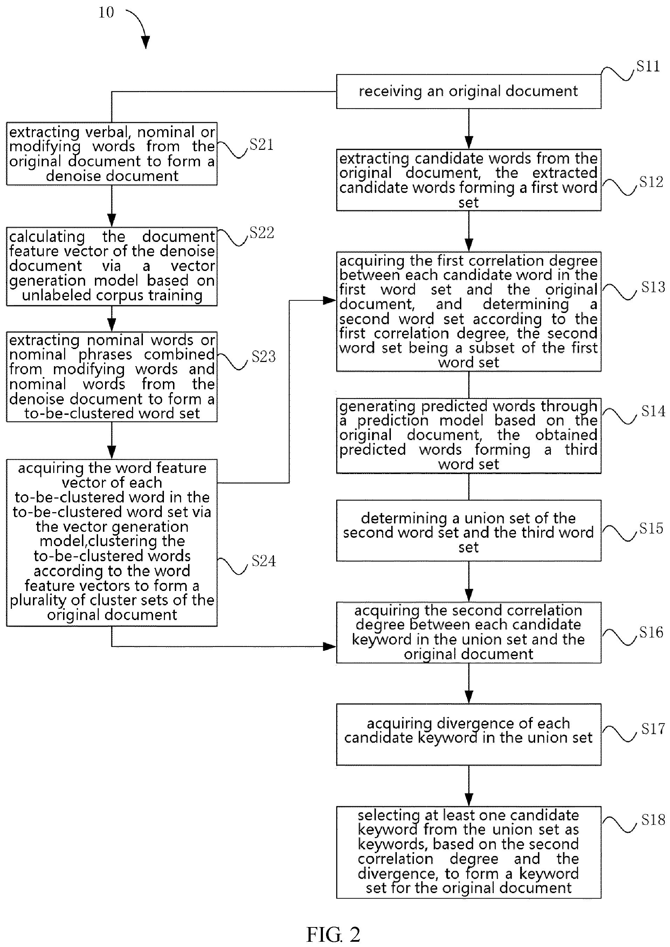

In one embodiment, referring to FIG. 2, the keyword extraction method 10 not only comprises the above steps but also comprises: step S21: extracting verbal, nominal or modifying words from the original document to form a denoised document; step S22: calculating the document feature vector of the denoised document via a vector generation model based on unlabeled/untagged corpus training; step S23: extracting nominal words or nominal phrases combined from modifying words and nominal words from the denoised document to form a to-be-clustered word set; and step S24: acquiring a word feature vector of each to-be-clustered word in the to-be-clustered word set via the vector generation model, clustering the to-be-clustered words according to the word feature vectors to form a plurality of cluster sets of the original document.

Herein, there are many clustering methods: for example, K-means clustering method, mean shift clustering method, density-based clustering method, expectation maximum (EM) clustering method based on Gaussian mixture model, agglomerative hierarchical clustering method, and graph community detection clustering method. Before clustering, the number of target clustering centers may be preset (for example, set to be 3). In the process of setting the number of the target clustering centers, the number may be set according to the number of words in a document to be clustered. The more the number of words is, the larger the set number of the target clustering centers. Various above clustering methods capable of providing clustering centers can achieve similar effects. The K-means clustering method has the following advantages, such as stable effect, low time complexity of implementation, and capability of specifying the clusters.

The step S22 of calculating the document feature vector of the denoised document via the vector generation model based on unlabeled corpus training may include one of the following approach:

First approach: calculating the document feature vector of the denoised document via a sentence-to-vector model. For example, the sentence-to-vector model is sent2vec model.

Second approach: calculating the word feature vector of each word in the denoised document via a word-to-vector model. The mean value of the word feature vectors of all the words in the denoised document is taken as the document feature vector of the denoised document. For example, the word-to-vector model is word2vec model.

In one embodiment, the step of calculating the document feature vector of the denoised document via the sentence-to-vector model in the first approach includes preparation phase and training phase. More specifically:

In the preparation phase, a corpus, the word number of which is larger than the preset number of words related to the field of the original document (for example: an unlabeled corpus with more than 1 million sentences), is prepared. The language of this corpus is the same as the original document. For example, when the original document is in Chinese, the prepared corpus is also in Chinese. That is to say, when the original document is in English, the prepared corpus is also in English. This corpus is usually an unlabeled corpus. This corpus is required to include all words in the word correlation topology, and each word in the word correlation topology appears in the corpus no less than the preset times (for example, 50 times). When the sentence-to-vector model is existing software, related systems and model software, such as python3.5 and sent2vec tool software, are installed.

In the training phase, the corpus is trained via model software. The following example illustrates the specific process of using the sent2vec tool software in the training phase:

Step 1: cleaning the prepared corpus to ensure that each sentence in the cleaned corpus is a natural language sentence with correct syntax and clear semantics. The specific cleaning method includes removing special characters, programming languages (such as html statements) and other parts that cannot effectively express the subject of the corpus.

Step 2: performing sentence division on the cleaned corpus, such that sentences are separated from each other with first preset symbols (such as line break).

Step 3: performing word division on each separated sentence in the corpus obtained after sentence division, such that words are separated from each other with second preset symbols (such as white space). Open source software may be adopted for word division, and the weight of the words in the word correlation topology may be enhanced.

Step 4: encoding the corpus content obtained after word division in utf-8 encoding format, and storing the encoded content in .txt format file.

Step 5: making sure the computer has a memory of more than 16GB and running the sent2vec tool software. Related parameters necessary for software operation are set. For example, the following settings are performed: the minimum number of occurrences of words in the corpus (minCount) is set to be 10; the word or document vector dimension (dim) is set to be 500; the maximum number of conjunctions (wordNgrams) is set to be 2, in which conjunction refers to take two common words connected together as one word; the number of negative samples (neg) during training is set to be 10; the number of randomly deactivated words (dropoutK) during training is set to be 4; the number of cached words (bucket) during training is set to be 1,000,000; and the maximum number of words (maxVocabSize) retained by the sent2vec model is set to be 500,000.

S6: loading the .txt format file, and training the sent2vec model by using the corpus after word division. After successful training, the successfully trained sent2vec model is stored in .bin format.

In one embodiment, the step of acquiring the first correlation degree between each candidate word in the first word set and the original document in the step S13 may include: calculating the first correlation degree between each candidate word and the original document according to the document feature vector, the plurality of cluster sets, and the word feature vector of each candidate word in the first word set. The step of acquiring the second correlation degree between each of the candidate keywords in the union set and the original document in the step S15 may include: calculating the second correlation degree between each of the candidate keywords and the original document according to the document feature vector, the plurality of cluster sets, and the word feature vector of each candidate keyword in the union set.

There are many methods for calculating the correlation degree between one word and one document, for example, methods such as term frequency-inverse document frequency (TF-IDF) algorithm, latent semantic indexing (ISI) algorithm or word mover's distance (WMD).

In the embodiments of the present disclosure, there is provided a method for calculating the correlation degree between the word and the document, more specifically:

In the step S13, the first correlation degree between the candidate word and the original document may be calculated by the following formula (1):

$$S(z, \mathrm{D}) = \alpha \cdot Y_{sim}(z, V_0) + \beta \cdot \frac{\sum_{i=1}^{M} Y_{sim}(z, C_i)}{M} \qquad (1)$$

in the formula (1), wherein $z$ indicates a word feature vector of each candidate word in the first word set; S(z,D) represents the first correlation degree or the second correlation degree; $\alpha$ denotes a first weight coefficient; $\beta$ indicates a second weight coefficient; $Y_{sim}()$ represents a similarity function; $V_0$ denotes the document feature vector; $C_i$ denotes a cluster feature vector of the i-th cluster set; $M$ is number of the cluster sets; $i$ and $M$ are positive integers.

The similarity function, such as cosine similarity function, Euclidean distance, Manhattan distance, Chebyshev distance, Minkowski distance, Hamming distance, Jaccard distance, etc. can characterize the similarity of two vectors.

The above formula (1) may be used for calculating the correlation degree between the word in any word set and the document.

In the step S15, the second correlation degree between the candidate keyword and the original document may also be calculated by the above formula (1), wherein in the formula (1), $z$ indicates a word feature vector of any candidate keyword in the union set; S(z,D) represents the first correlation degree or the second correlation degree; $\alpha$ denotes the first weight coefficient; $\beta$ indicates the second weight coefficient; $Y_{sim}()$ represents the similarity function; $V_0$ denotes the document feature vector; $C_i$ denotes the cluster feature vector of the i-th cluster set; $M$ is the number of the cluster sets; and $i$ and $M$ are positive integers.

The above method of calculating the correlation degree between the word and the document by adoption of the formula (1) is implemented on the basis of adopting the sent2vec model and performing clustering. Based on the basis for optimizing the vector representation at the document or sentence level via the sent2vec model, clustering is adopted to achieve effective classification, so that words can be better mapped in the same semantic space. The correlation degree between the word and the document feature vector and the correlation degree between the word and the clustering feature vector are combined in the formula (1) to more accurately express the correlation degree between the word and the document.

In one embodiment, the prediction model includes a bilateral network and a unilateral RNN. The step of generating the predicted words via the prediction model in the step S14 may include calculating original word feature vector of the original document via a vector generation model, obtaining a memory representation vector via the bilateral network based on the original word feature vector, and generating the predicted words via the unilateral RNN based on the memory representation vector and the document feature vector.

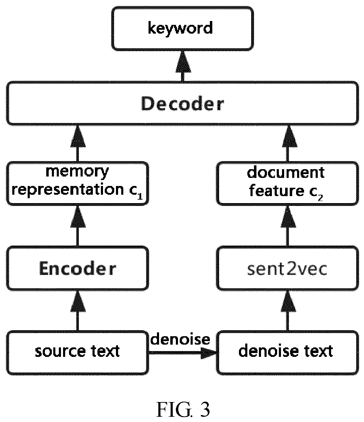

Herein, the prediction model may adopt an Encoder-Decoder keyword generation model. The architectural principles thereof may refer to FIG. 3. The training process may be as follows: acquiring a training set having a plurality of training corpora and one or more labeled keywords corresponding to each training corpus; obtaining a training word feature vector of each word in the training corpus and a first corpus feature of the training corpus through the vector generation model; obtaining a second corpus feature of an original corpus via the bilateral network based on the training word feature vector; obtaining output keywords via the unilateral RNN based on the first corpus features and the second corpus features; and calculating loss based on the labeled keywords and the output keywords, and adjusting parameters of the prediction model according to the loss.

An example of the training process is illustratively described hereinafter, which includes:

step a: preparing a corpus with keyword tagging (more than 20,000 samples), and ensuring that the type of corpus is consistent, such as academic articles, media news, etc., in which each sample includes 3-5 keywords.

step b: performing data preprocessing on the labeled corpus, which includes performing word division on all the labeled corpora via a word divider the same as that in the training phase. Taking sample A = {text; keyword 1,..., keyword n} as an example, one sample is split into multiple one-to-one samples $A_1$ = {text; keyword 1}, ..., $A_n$ = {text; keyword n} and merged into a new corpus.

step c: generating word vectors via trained sent2vec, and inputting the word vectors into Encoder. Herein, Encoder may adopt a bidirectional gated recurrent unit (Bi-GRU) or a bidirectional long short-term memory (Bi-LSTM). Taking Bi-GRU as an example, the output of one direction may be represented by $u_i = BiGRU\left(x_i, \overrightarrow{u_{i-1}}, \overleftarrow{u_{i+1}}\right)$, i = 1,2, ..., L, wherein $x_i$ indicates the current input $i^{th}$ keyword; $\overrightarrow{u_{i-1}}, \overleftarrow{u_{i+1}}$ are respectively forward output of the previous word and reverse output of the next word; $u_i$ represents the forward output of the current $i^{th}$ keyword; bidirectional output is $u_i = \left[\overrightarrow{u_i}; \overleftarrow{u_i}\right]$, namely the forward output and the reverse output of the word are spliced to obtain the bidirectional output of the $i^{th}$ keyword; and the outputs of keywords at the beginning and the end are spliced to obtain the memory representation vector $c_1$ = $[u_1;u_L]$ of the text. As the outputs of the keywords at the beginning and the end include sequence information of the text, the outputs of the keywords at the beginning and the end can be spliced to obtain a simple vector representation of the text.

step d: generating the document feature vector $c_2$ of the denoised document via the trained sent2vec.

step e: taking $c_1$ and $c_2$ as input and inputting them into Decoder, in which Decoder adopts a bilateral RNN to output the generated keywords. The specific mode may be expressed as the following two equations. One equation is $s_t$ = $f(y_{t-1}, s_{t-1}, c_1, c_2)$, wherein the inputs are the previous keyword $y_{t-1}$, the output of the previous word $s_{t-1}$, and the feature vector expressions $c_1, c_2$ of the text obtained in the previous steps. For example, in the process of calculating the first keyword, only the feature vector expressions $c_1, c_2$ of the text obtained in the previous steps may be inputted to generate the vector expression $s_t$ of the predicted keyword by this formula. Another equation is $p(y_t|y_{1,...,t-1},x)$ = $g(y_{t-1}, s_t, c_1, c_2)$, wherein the inputs are respectively the previous keyword $y_{t-1}$, the vector expression $s_t$ of the keyword, and the feature vector expressions $c_1,c_2$ of the text; and the obtained output is the text expression $y_t$ of the current keyword generated based on the above features.

step f: comparing the labeled/tagged keywords with the generated keywords, adjusting model parameters and training the model through multiple iterations.

The trained prediction model can generate the keywords based on the original document, so the embodiments of the keyword extraction method in the present disclosure can generate reliable keywords without being affected by the frequency of candidate words, thereby solving the problem of selecting high-frequency words in the traditional method.

In one embodiment, the step of acquiring the divergence of each candidate keyword in the union set in the step S15 may include: determining urrent to-be-determined candidate keyword from the union set; acquiring a correlation degree between the current to-be-determined candidate keyword and the original document and the correlation degree between the current to-be-determined candidate keyword and the selected keyword in the keyword set; and determining a divergence of the current to-be-determined candidate keyword based on the correlation degree between the current to-be-determined candidate keyword and the original document, the correlation degree between the current to-be-determined candidate keyword and the selected keyword in the keyword set, and a preset divergence, until the divergence of each candidate keyword in the union set is determined.

The above method is adopted to sequentially calculate the divergence of each candidate keyword, and take the divergence as the basis for selecting the keywords of the original document, so as to avoid the problem of selecting too many redundant keywords.

In one embodiment, the divergence may be calculated by the following formula (2):

$$S_1(x, D) = \arg\max_{x \in \Omega \backslash \theta} \left[ (1 - \lambda) S(x, D) - \lambda \max_{y \in \theta} Y_{sim}(\mathrm{x}, y) \right] \quad (2)$$

wherein $x$ indicates a word feature vector of the current to-be-determined candidate keyword; $y$ represents a word feature vector of the selected keyword in the keyword set; $S_1(x, D)$ denotes the divergence of the current to-be-determined candidate keyword; $S(x, D)$ indicates the correlation degree between the current to-be-determined candidate keyword and the original document; $Y_{sim}(x, y)$ represents the correlation degree between the current to-be-determined candidate keyword and the selected keyword in the keyword set; $\lambda$ denotes the preset divergence; $\lambda$ is greater than or equal to 0 and less than or equal to 1. When $\lambda$ is larger, the divergence of the keyword is higher.

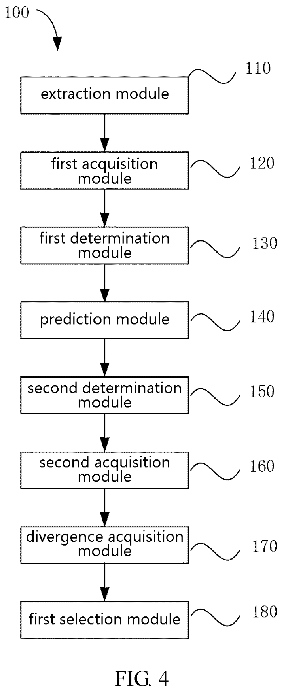

Based on the similar invention concept, FIG. 4 shows a keyword extraction device 100. Referring to FIG. 4, the keyword extraction device 100 comprises: a receiving module configured to receive an original document; an extraction module 110 configured to extract candidate words from the original document, the extracted candidate words forming a first word set; a first acquisition module 120 configured to acquire a first correlation degree between each candidate word in the first word set and the original document; a first determination module 130 configured to determine a second word set according to the first correlation degree, the second word set being a subset of the first word set; a prediction module 140 configured to generate predicted words through a prediction model based on the original document, the obtained predicted words forming a third word set; a second determination module 150 configured to determine an union set of the second word set and the third word set; a second acquisition module 160 configured to acquire the second correlation degree between each of the candidate keywords in the union set and the original document; a divergence acquisition module 170 configured to acquire a divergence of each candidate keyword in the union set; and a first selection module 180 configured to select at least one candidate keyword from the union set as keywords, based on the second correlation degree and the divergence, to form a keyword set for the original document.

In one embodiment, the first selection module 180 includes: a first judging module configured to judge whether the second correlation degree between each candidate keyword in the union set is greater than a preset correlation degree threshold; a second judging module configured to judge whether the divergence of each candidate keyword in the union set is greater than a preset divergence threshold; and a second selection module configured to select at least one candidate keyword from the union set, the second correlation degree between the at least one candidate keyword being greater than the preset correlation degree threshold and the divergence of the at least one candidate keyword being greater than the preset divergence threshold, and to take the at least one candidate keyword as the keyword.

In one embodiment, the first selection module 180 further includes: a weighting module configured to multiply the second correlation degree between portion of candidate keywords from the third word set in the union set by a compensation factor greater than 1 to get a product as a finally determined second correlation degree.

In one embodiment, the divergence acquisition module 170 includes: a third determination module configured to determine current to-be-determined candidate keyword from the union set; a third acquisition module configured to acquire a correlation degree between the current to-be-determined candidate keyword and the original document and a correlation degree between the current to-be-determined candidate keyword and the selected keyword in the keyword set; and a divergence determination module configured to determine the divergence of the current to-be-determined candidate keyword according to the correlation degree between the current to-be-determined candidate keyword and the original document, the correlation degree between the current to-be-determined candidate keyword and the selected keyword in the keyword set, and a preset divergence, until the divergence of each candidate keyword in the union set is determined.

In one embodiment, the divergence determination module 170 is further configured to calculate the divergence of the current to-be-determined candidate keyword according to the following formula:

$$S_1(x, D) = \underset{x \in \Omega \backslash \theta}{\arg\max} \left[ (1 - \lambda) S(x, D) - \lambda \max_{y \in \theta} Y_{sim}(x, y) \right];$$

wherein $x$ indicates a word feature vector of the current to-be-determined candidate keyword; $y$ represents a word feature vector of the selected keyword in the keyword set; $S_1(x, D)$ denotes the divergence of the current to-be-determined candidate keyword; $S(x, D)$ indicates the correlation degree between the current to-be-determined candidate keyword and the original document; $Y_{sim}(x, y)$ represents the correlation degree between the current to-be-determined candidate keyword and the selected keyword in the keyword set; $\lambda$ denotes the preset divergence; and $\lambda$ is greater than or equal to 0 and less than or equal to 1.

In one embodiment, the extraction module 110 is also configured to: extract a plurality of candidate words matched with a preset phrase granularity from the original document according to candidate word extraction rules determined according to the preset phrase granularity; wherein the candidate words matched with the preset phrase granularity include: nominal words, or nominal phrases combined from modifying words with nominal words.

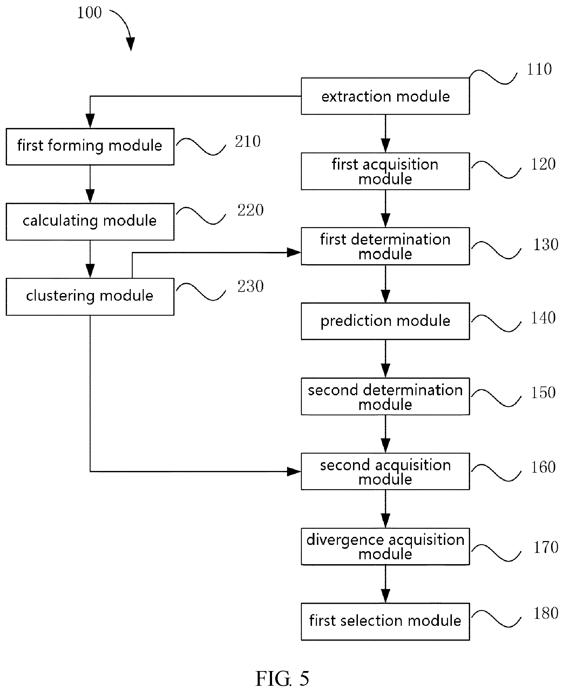

In one embodiment, referring to FIG. 5, the keyword extraction device 100 further comprises: a first forming module 210 configured to form a denoised document by extracting verbal, nominal or modifying words from the original document; a calculating module 220 configured to calculate a document feature vector of the denoised document via a vector generation model based on unlabeled corpus training; and a clustering module 230 configured to extract nominal words or nominal phrases combined from modifying words and nominal words from the denoised document to form a to-be-clustered word set, acquire the word feature vector of each to-be-clustered word in the to-be-clustered word set via the vector generation model, cluster the to-be-clustered words according to the word feature vectors to form a plurality of cluster sets of the original document.

In one embodiment, the first acquisition module 120 includes a second calculating module configured to calculate the first correlation degree between each candidate word and the original document according to the document feature vector, the plurality of cluster sets and the word feature vector of each candidate word in the first word set. The second acquisition module 160 includes a third calculating module configured to calculate the second correlation degree between each of the candidate keywords and the original document according to the document feature vector, the plurality of cluster sets and the word feature vector of each candidate keyword in the union set.

In one embodiment, the second calculating module calculates the first correlation degree according to the following formula, and the third calculating module calculates the second correlation degree according to the following formula:

$$S(z, D) = \alpha \cdot Y_{sim}(z, V_0) + \beta \cdot \frac{\sum_{i=1}^{M} Y_{sim}(z, C_i)}{M};$$

wherein $z$ indicates a word feature vector of each candidate word in the first word set or a word feature vector of any candidate keyword in the union set; $S(z,D)$ represents the first correlation degree or the second correlation degree; $\alpha$ denotes a first weight coefficient; $\beta$ indicates a second weight coefficient; $Y_{sim}()$ represents a similarity function; $V_0$ denotes the document feature vector; $C_i$ denotes a cluster feature vector of the i-th cluster set; $M$ is number of the cluster sets; and $i$ and $M$ are positive integers.

In one embodiment, the prediction model includes a bilateral network and a unilateral RNN. The prediction module 140 includes: a word vector generation unit configured to calculate original word feature vector of the original document via the vector generation model; a coding unit configured to obtain a memory representation vector via the bilateral network based on the original word feature vector; and a decoding unit configured to generate the predicted words via the unilateral RNN based on the memory representation vector and the document feature vector.

In one embodiment, the prediction model is obtained by acquiring a training set having a plurality of training corpora and one or more labeled keywords corresponding to each training corpus; obtaining a training word feature vector of each word in the training corpus and a first corpus feature of the training corpus through the vector generation model; obtaining a second corpus feature of an original corpus via the bilateral network based on the training word feature vector; obtaining output keywords via the unilateral RNN based on the first corpus features and the second corpus features; and calculating loss based on the labeled keywords and the output keywords, and adjusting parameters of the prediction model according to the loss.

In one embodiment, the first determination module 130 includes: a second forming module configured to select candidate words, with the first correlation degree greater than the first preset correlation value, to form the second word set; or a third forming module configured to select candidate words with the first correlation degree listed before the first preset position in an order from high correlation degree to low correlation degree, to form the second word set; or a fourth forming module configured to select candidate words with the first correlation degree in a previous first preset proportion part in the order from high correlation degree to low correlation degree, to form the second word set.

Regarding the keyword extraction device 100 in the above embodiment, the specific manner in which each unit operates has been described in detail in the embodiment of the method, and will not be explained in detail herein.

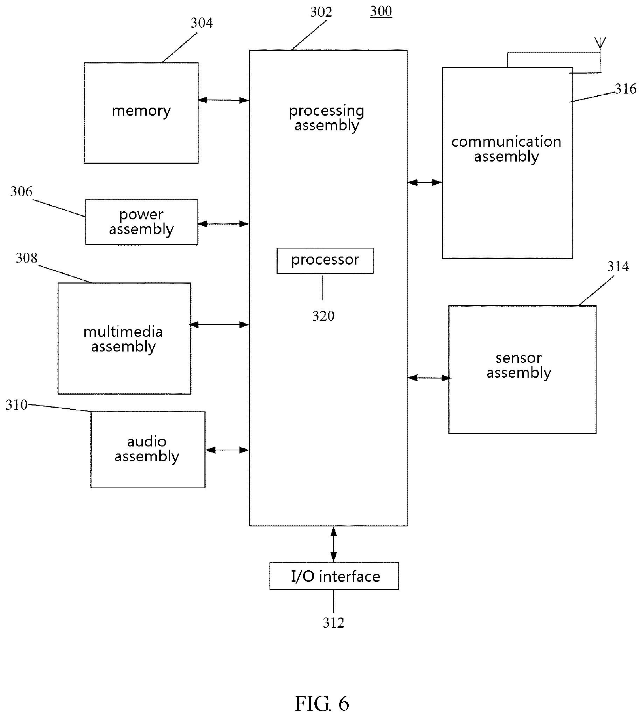

FIG. 6 is a block diagram illustrating the device provided by any foregoing embodiment in accordance with an exemplary embodiment. For example, the device 300 may be a mobile phone, a computer, a digital broadcasting terminal, a messaging device, a game console, a tablet, a medical device, a fitness apparatus, a personal digital assistant, and the like.

Referring to FIG. 6, the device 300 may comprise one or more of a processing assembly 302, a memory 304, a power assembly 306, a multi-media assembly 308, an audio assembly 310, an input/output (I/O) interface 312, a sensor assembly 314 and a communication assembly 316.

The processing assembly 302 typically controls overall operations of the device 300, such as the operations associated with display, telephone calls, data communications, camera operations, and recording operations. The processing assembly 302 may include one or more processors 320 to execute instructions to perform all or part of the steps in the above described methods. Moreover, the processing assembly 302 may include one or more modules which facilitate the interaction between the processing assembly 302 and other assemblies. For example, the processing assembly 302 may include a multimedia module to facilitate the interaction between the multimedia assembly 308 and the processing assembly 302.

The memory 304 is configured to store various types of data to support the operation of the device 300. Examples of such data include instructions for any applications or methods operated on the device 300, contact data, phonebook data, messages, pictures, video, etc. The memory 304 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power assembly 306 provides power to various assemblies of the device 300. The power assembly 306 may include a power management system, one or more power sources, and any other assemblies associated with the generation, management, and distribution of power in the device 300.

The multimedia assembly 308 includes a screen providing an output interface between the device 300 and the user. In one embodiment, the screen may include a liquid crystal display (LCD) and a touch panel (TP). In one embodiment, organic light-emitting diode (OLED) or other types of displays can be employed.

If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In one embodiment, the multimedia assembly 308 includes a front camera and/or a rear camera. The front camera and the rear camera may receive an external multimedia datum while the device 300 is in an operation mode, such as a photographing mode or a video mode. Each of the front camera and the rear camera may be a fixed optical lens system or have focus and optical zoom capability.

The audio assembly 310 is configured to output and/or input audio signals. For example, the audio assembly 310 includes a microphone (MIC) configured to receive an external audio signal when the device 300 is in an operation mode, such as a call mode, a recording mode, and a voice recognition mode. The received audio signal may be further stored in the memory 304 or transmitted via the communication assembly 316. In one embodiment, the audio assembly 310 further includes a speaker to output audio signals.

The I/O interface 312 provides an interface between the processing assembly 302 and peripheral interface modules, such as a keyboard, a click wheel, buttons, and the like. The buttons may include, but are not limited to, a home button, a volume button, a starting button, and a locking button.

The sensor assembly 314 includes one or more sensors to provide status assessments of various aspects of the device 300. For example, the sensor assembly 314 may detect an open/closed status of the device 300, relative positioning of assemblies, e.g., the display and the keypad, of the device 300, a change in position of the device 300 or a assembly of the device 300, a presence or absence of user contact with the device 300, an orientation or an acceleration/deceleration of the device 300, and a change in temperature of the device 300. The sensor assembly 314 may include a proximity sensor configured to detect the presence of nearby objects without any physical contact. The sensor

**EP 3 835 973 A1**

assembly 314 may also include a light sensor, such as a CMOS or CCD image sensor, for use in imaging applications. In one embodiment, the sensor assembly 314 may also include an accelerometer sensor, a gyroscope sensor, a magnetic sensor, a pressure sensor, or a temperature sensor.

The communication assembly 316 is configured to facilitate communication, wired or wirelessly, between the device 300 and other devices. The device 300 can access a wireless network based on a communication standard, such as Wi-Fi, 2G, 3G, 4G, 5G, or a combination thereof. In one exemplary embodiment, the communication assembly 316 receives a broadcast signal or broadcast associated information from an external broadcast management system via a broadcast channel. In one exemplary embodiment, the communication assembly 316 further includes a near field communication (NFC) module to facilitate short-range communications. For example, the NFC module may be implemented based on a radio frequency identification (RFID) technology, an infrared data correlation (IrDA) technology, an ultra-wideband (UWB) technology, a Bluetooth (BT) technology, and other technologies.

In exemplary embodiments, the device 300 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic assemblies or processing circuits, for performing the above described methods.

In exemplary embodiments, there is also provided a computer-readable storage medium including instructions, such as included in the memory 304, executable by the processor 320 in the device 300, for performing the above-described methods. For example, the non-transitory computer-readable storage medium may be a ROM, a random-access memory (RAM), a CD-ROM, a magnetic tape, a floppy disc, an optical data storage device, and the like.

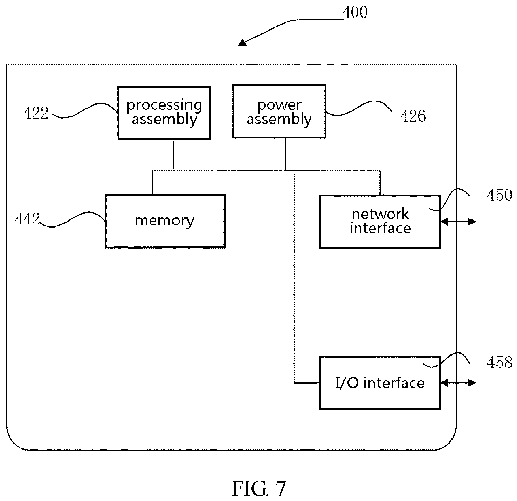

FIG. 7 is a block diagram illustrating an electronic device 400 in accordance with an exemplary embodiment. For example, the device 400 may be provided as a server. Referring to FIG. 7, the device 400 comprises a processing assembly 422 which includes one or more processors, and a memory resource represented by a memory 432 which is configured to store instructions, e.g., applications, executed by the processing assembly 422. The applications stored in the memory 432 may include one or more modules each of which corresponds to one group of instructions. In addition, the processing assembly 422 is configured to execute the instructions to implement the above-mentioned method.

The device 400 may further comprise one power assembly 426 which is configured to implement the power management of the device 300, one wired or wireless network interface 450 which is configured to connect the device 400 to the network, and one I/O interface 458. The device 400 may operate an operating system such as Windows Server™, Mac OS X™, Unix™, Linux™ or FreeBSD™ stored in the memory 432.

Other embodiments of the invention will be apparent to those skilled in the art from consideration of the specification and practice of the invention disclosed here. This application is intended to cover any variations, uses, or adaptations of the invention following the general principles thereof and including such departures from the present disclosure as come within known or customary practice in the art. It is intended that the specification and examples be considered as exemplary only, with a true scope of the invention being indicated by the following claims.

It will be appreciated that the present invention is not limited to the exact construction that has been described above and illustrated in the accompanying drawings, and that various modifications and changes can be made without departing from the scope thereof. It is intended that the scope of the invention only be limited by the appended claims.

**Claims**

1. A keyword extraction method, being **characterized in that** the method comprises:

   receiving an original document (S11);
   extracting candidate words from the original document, the extracted candidate words forming a first word set (S12);
   acquiring a first correlation degree between each candidate word in the first word set and the original document, and determining a second word set according to the first correlation degree, the second word set being a subset of the first word set (S13);
   generating predicted words through a prediction model based on the original document, the predicted words forming a third word set (S14);
   determining a union set of the second word set and the third word set (S15), acquiring a second correlation degree between each candidate keyword in the union set and the original document (S16), and acquiring a divergence of each candidate keyword in the union set (S17); and
   selecting at least one candidate keyword from the union set set as keywords, based on the second correlation degree and the divergence, to form a keyword set for the original document (S18).

2. A keyword extraction device (100), being **characterized in that** the device (100) comprises:

a receiving module configured to receive an original document;

an extraction module (110) configured to extract candidate words from the original document, the extracted candidate words forming a first word set;

a first acquisition module (120) configured to acquire a first correlation degree between each candidate word in the first word set and the original document;

a first determination module (130) configured to determine a second word set according to the first correlation degree, the second word set being a subset of the first word set;

a prediction module (140) configured to generate predicted words through a prediction model based on the original document, the obtained predicted words forming a third word set;

a second determination module (150) configured to determine a union set of the second word set and the third word set;

a second acquisition module (160) configured to acquire the second correlation degree between each of the candidate keywords in the union set and the original document;

a divergence acquisition module (170) configured to acquire a divergence of each candidate keyword in the union set; and

a first selection module (180) configured to select at least one candidate keyword from the union set as keywords, based on the second correlation degree and the divergence, to form a keyword set for the original document.

3. The keyword extraction device (100) according to claim 2, being **characterized in that** the first selection module (180) comprises:

a first judging module configured to judge whether the second correlation degree between each candidate keyword in the union set is greater than a preset correlation degree threshold;

a second judging module configured to judge whether the divergence of each candidate keyword in the union set is greater than a preset divergence threshold; and

a second selection module configured to select at least one candidate keyword from the union set, the second correlation degree between the at least one candidate keyword being greater than the preset correlation degree threshold and the divergence of the at least one candidate keyword being greater than the preset divergence threshold, and to take the at least one candidate keyword as the keyword.

4. The keyword extraction device (100) according to claim 3, being **characterized in that** the first selection module (180) further comprises:

a weighting module configured to multiply the second correlation degree between portion of candidate keywords from the third word set in the union set by a compensation factor greater than 1 to get a product as a finally determined second correlation degree.

5. The keyword extraction device (100) according to any one of claims 2 to 4, being **characterized in that** the divergence acquisition module (170) comprises:

a third determination module configured to determine current to-be-determined candidate keyword from the union set;

a third acquisition module configured to acquire a correlation degree between the current to-be-determined candidate keyword and the original document and a correlation degree between the current to-be-determined candidate keyword and the selected keyword in the keyword set; and

a divergence determination module configured to determine a divergence of the current to-be-determined candidate keyword according to the correlation degree between the current to-be-determined candidate keyword and the original document, the correlation degree between the current to-be-determined candidate keyword and the selected keyword in the keyword set, and a preset divergence, until the divergence of each candidate keyword in the union set is determined.

6. The keyword extraction device (100) according to claim 5, being **characterized in that** the divergence determination module is further configured to calculate the divergence of the current to-be-determined candidate keyword according to a formula:

$$S_1\left(x, D\right) = \arg\max_{x \in \Omega \backslash \theta}\left[\left(1-\lambda\right)S\left(x, D\right) - \lambda \max_{y \in \theta} Y_{sim}\left(\mathrm{x}, y\right)\right];$$

wherein $x$ indicates a word feature vector of the current to-be-determined candidate keyword; $y$ represents a word feature vector of the selected keyword in the keyword set; $S_1(x, D)$ denotes the divergence of the current to-be-determined candidate keyword; $S(x, D)$ indicates the correlation degree of the current to-be-determined candidate keyword with the original document; $Y_{sim}(x, y)$ represents the correlation degree of the current to-be-determined candidate keyword with the selected keyword in the keyword set; $\lambda$ denotes the preset divergence; and $\lambda$ is greater than or equal to 0 and less than or equal to 1.

7. The keyword extraction device (100) according to any one of claims 2 to 6, being **characterized in that** the extraction module (110) is further configured to:

   extract a plurality of candidate words matched with a preset phrase granularity from the original document according to candidate word extraction rules determined according to the preset phrase granularity;
   wherein the candidate words matched with the preset phrase granularity comprise: nominal words, or nominal phrases combined from modifying words and nominal words.

8. The keyword extraction device (100) according to any one of claims 2 to 7, being **characterized in that** the device (100) further comprises:

   a first forming module (210) configured to form a denoised document by extracting verbal, nominal or modifying words from the original document;
   a calculating module (220) configured to calculate a document feature vector of the denoised document via a vector generation model based on unlabeled corpus training; and
   a clustering module (230) configured to extract nominal words or nominal phrases combined from modifying words and nominal words from the denoised document to form a to-be-clustered word set, acquire a word feature vector of each to-be-clustered word in the to-be-clustered word set via the vector generation model, cluster the to-be-clustered words according to the word feature vectors to form a plurality of cluster sets for the original document.

9. The keyword extraction device (100) according to claim 8, being **characterized in that** the first acquisition module (120) comprises:

   a second calculating module configured to calculate the first correlation degree between each candidate word and the original document according to the document feature vector, the plurality of cluster sets and the word feature vector of each candidate word in the first word set;
   the second acquisition module (160) comprises:
   a third calculating module configured to calculate the second correlation degree between each of the candidate keywords and the original document according to the document feature vector, the plurality of cluster sets and the word feature vector of each candidate keyword in the union set.

10. The keyword extraction device (100) according to claim 9, being **characterized in that** the first correlation degree and the second correlation degree are calculated respectively by the second calculating module and the third calculating module according to a formula:

$$\mathrm{S}(z, \mathrm{D}) = \alpha \cdot Y_{sim}(z, V_0) + \beta \cdot \frac{\sum_{i=1}^{M} \mathrm{Y}_{sim}(z, C_i)}{M} \; ;$$

wherein $z$ indicates a word feature vector of each candidate word in the first word set or a word feature vector of any candidate keyword in the union; $S(z,D)$ represents the first correlation degree or the second correlation degree; $\alpha$ denotes a first weight coefficient; $\beta$ indicates a second weight coefficient; $Y_{sim}()$ represents a similarity function; $V_0$ denotes the document feature vector; $C_i$ denotes a cluster feature vector of the i-th cluster set; $M$ is number of the cluster sets; and $i$ and $M$ are positive integers.

11. The keyword extraction device (100) according to any one of claims 8 to 10, being **characterized in that** the prediction model comprises a bilateral network and a unilateral RNN; and the prediction module (140) comprises:

    a word vector generation unit configured to calculate original word feature vector of the original document via the vector generation model;
a coding unit configured to obtain a memory representation vector via the bilateral network based on the original word feature vector; and
a decoding unit configured to generate the predicted words via the unilateral RNN based on the memory representation vector and the document feature vector.

12. The keyword extraction device (100) according to claim 11, being **characterized in that** the prediction model is obtained by:

acquiring a training set having a plurality of training corpora and one or more labeled keywords corresponding to each training corpus;
obtaining a training word feature vector of each word in the training corpus and a first corpus feature of the training corpus through the vector generation model;
obtaining a second corpus feature of an original corpus via the bilateral network based on the training word feature vector;
obtaining output keywords via the unilateral RNN based on the first corpus features and the second corpus features; and
calculating loss based on the labeled keywords and the output keywords, and adjusting parameters of the prediction model according to the loss.

13. The keyword extraction device (100) according to any one of claims 2 to 12, being **characterized in that** the first determination module (130) comprises:

a second forming module configured to select candidate words with the first correlation degree greater than the first preset correlation value, to form the second word set; or
a third forming module configured to select candidate words with the first correlation degree listed before a first preset position in an order from high correlation degree to low correlation degree, to form the second word set; or
a fourth forming module configured to select candidate words with the first correlation degree in a previous first preset proportion part in the order from high correlation degree to low correlation degree, to form the second word set.

14. An electronic device (300), being **characterized in that** the electronic device comprises:

a memory (304) configured to store instructions; and
a processor (320) configured to call the instructions stored in the memory to execute the keyword extraction method according to claim 1.

15. A computer-readable storage medium having stored therein instructions, being **characterized in that** implementing the keyword extraction method according to claim 1 when the instructions are executed by a processor.

10

receiving an original document S11

extracting candidate words from the original document, the extracted candidate words forming a first word set S12

acquiring the first correlation degree between each candidate word in the first word set and the original document, and determining a second word set according to the first correlation degree, the second word set being a subset of the first word set S13

generating predicted words through a prediction model based on the original document, the obtained predicted words forming a third word set S14

determining a union set of the second word set and the third word set S15

acquiring the second correlation degree between each candidate keyword in the union set and the original document S16

acquiring divergence of each candidate keyword in the union set S17

selecting at least one candidate keyword from the union set as keywords, based on the second correlation degree and the divergence, to form a keyword set for the original document S18

FIG. 1

10

S11 — receiving an original document

S21 — extracting verbal, nominal or modifying words from the original document to form a denoise document

S12 — extracting candidate words from the original document, the extracted candidate words forming a first word set

S22 — calculating the document feature vector of the denoise document via a vector generation model based on unlabeled corpus training

S13 — acquiring the first correlation degree between each candidate word in the first word set and the original document, and determining a second word set according to the first correlation degree, the second word set being a subset of the first word set

S23 — extracting nominal words or nominal phrases combined from modifying words and nominal words from the denoise document to form a to-be-clustered word set

S14 — generating predicted words through a prediction model based on the original document, the obtained predicted words forming a third word set

S24 — acquiring the word feature vector of each to-be-clustered word in the to-be-clustered word set via the vector generation model, clustering the to-be-clustered words according to the word feature vectors to form a plurality of cluster sets of the original document

S15 — determining a union set of the second word set and the third word set

S16 — acquiring the second correlation degree between each candidate keyword in the union set and the original document

S17 — acquiring divergence of each candidate keyword in the union set

S18 — selecting at least one candidate keyword from the union set as keywords, based on the second correlation degree and the divergence, to form a keyword set for the original document

FIG. 2

FIG. 3

100

extraction module ⌇ 110

first acquisition
module ⌇ 120

first determination
module ⌇ 130

prediction module ⌇ 140

second determination
module ⌇ 150

second acquisition
module ⌇ 160

divergence acquisition
module ⌇ 170

first selection module ⌇ 180

FIG. 4

100

extraction module    110

first forming module    210

first acquisition
module    120

calculating module    220

first determination
module    130

clustering module    230

prediction module    140

second determination
module    150

second acquisition
module    160

divergence acquisition
module    170

first selection module    180

FIG. 5

FIG. 6

FIG. 7

Europäisches
Patentamt

European
Patent Office

Office européen
des brevets

# EUROPEAN SEARCH REPORT

Application Number

EP 20 17 8727

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/163690 A1 (BAO XIAO [CN]) 30 May 2019 (2019-05-30) * paragraphs [0023], [0026], [0034], [0111] * ----- | 1-15 | INV. G06F16/34 G06F40/274 |

TECHNICAL FIELDS SEARCHED (IPC)

G06F

The present search report has been drawn up for all claims

| Place of search | Date of completion of the search | Examiner |
|---|---|---|
| The Hague | 15 September 2020 | Rameseder, Jonathan |

EPO FORM 1503 03.82 (P04C01)

## ANNEX TO THE EUROPEAN SEARCH REPORT
## ON EUROPEAN PATENT APPLICATION NO.

EP 20 17 8727

This annex lists the patent family members relating to the patent documents cited in the above-mentioned European search report.
The members are as contained in the European Patent Office EDP file on
The European Patent Office is in no way liable for these particulars which are merely given for the purpose of information.

15-09-2020

| Patent document cited in search report | Publication date | Patent family member(s) | Publication date |
|---|---|---|---|
| US 2019163690 A1 | 30-05-2019 | CN 108073568 A<br>US 2019163690 A1<br>WO 2018086470 A1 | 25-05-2018<br>30-05-2019<br>17-05-2018 |

EPO FORM P0459

For more details about this annex : see Official Journal of the European Patent Office, No. 12/82